**Europäisches Patentamt**

**European Patent Office**

**Office européen des brevets**

(19)

(11) Veröffentlichungsnummer: **0 162 459**
**B1**

(12) **EUROPÄISCHE PATENTSCHRIFT**

(45) Veröffentlichungstag der Patentschrift:
23.09.87

(51) Int. Cl.⁴: **B 60 R 13/06**, B 29 C 45/14

(21) Anmeldenummer: **85106291.9**

(22) Anmeldetag: **22.05.85**

(54) **Verfahren zur Verbindung von Glasscheiben mit direkt angespritztem Rahmen.**

(30) Priorität: **24.05.84 DE 3419433**

(43) Veröffentlichungstag der Anmeldung:
**27.11.85 Patentblatt 85/48**

(45) Bekanntmachung des Hinweises auf die Patenterteilung:
**23.09.87 Patentblatt 87/39**

(84) Benannte Vertragsstaaten:
**DE FR GB IT SE**

(56) Entgegenhaltungen:
**EP-A-0 049 613**
**EP-A-0 076 924**
**EP-A-0 121 480**
**EP-A-0 122 545**
**FR-A-2 157 189**
**US-A-3 659 896**
**US-A-4 139 234**

**A.T.Z. AUTOMOBILTECHNISCHE ZEITSCHRIFT,
Band 85, Nr. 11, November 1983, Schwäbisch
Gmünd, DE; "Scheibenverklebung mit
Polyurethan", Seite 678
A.T.Z. AUTOMOBILTECHNISCHE ZEITSCHRIFT,
Band 81, Nr. 11, November 1979, Schwäbisch
Gmünd, DE; M. HERRMANN "Einkleben von
Fensterscheiben in Kraftfahrzeuge mittels
pumpbarem Klebedichtungsband", Seiten 587-590,
595-596**

(73) Patentinhaber: **METZELER KAUTSCHUK GMBH,**
**Gneisenaustrasse 15, D-8000 München 50 (DE)**

(72) Erfinder: **Caspari, Horst, Poststrasse 50, D-6800**
**Mannheim 41 (DE)**

(74) Vertreter: **Michelis, Theodor, Dipl.- Ing.,**
**Gneisenaustrasse 15, D-8000 München 50 (DE)**

## Beschreibung

Die Erfindung betrifft ein Verfahren zur dauerhaften Verbindung von Glasscheiben mit direkt angespritztem Rahmen aus einem Thermoplast, insbesondere für feststehende Scheiben aus Einscheiben- oder Verbundsicherheitsglas in Kraftfahrzeugen.

Aus der DE-A- 31 40 366 ist das grundsätzliche Prinzip bekannt, einen derartigen Profilrahmen unmittelbar in einem Arbeitsgang an den Scheibenrand festhaftend anzuspritzen, um dann die Scheibe mit Rahmen als integrales Bauteil in das entsprechende Kraftfahrzeug einzusetzen.

Dabei bereitet es jedoch im allgemeinen Schwierigkeiten, eine dauerhafte Verbindung zwischen dem Rahmen und der Glasscheibe zu gewährleisten, die insbesondere auch hydrolysebeständig ist.

Der vorliegenden Erfindung liegt daher die Aufgabe zugrunde, ein Verfahren anzugeben, mit dem eine dauerhafte Verbindung zwischen Rahmen und Glasscheibe geschaffen werden kann, wobei insbesondere auf eine einfache Herstellung bei Raumtemperatur Wert gelegt ist.

Zur Lösung dieser Aufgabe sind erfindungsgemäß die folgenden Verfahrensschritte vorgesehen:

a) Reinigen des Umfangsrandes der Glasscheibe mit einem Lösungsmittel;

b) Aufbringen eines schwarzen Glasprimers auf den gereinigten Rand;

c) Auftragen eines Zweikomponenten-Klebers auf den geprimerten Rand;

d) Antrocknen des Klebers und

e) Anspritzen des Rahmens in einer die Glasscheibe aufnehmenden kalten Form im Spritzgießverfahren.

Zweckmäßig ist es dabei, wenn das Lösungsmittel zum Reinigen hydrophobierende Komponenten aufweist und ein Primer auf Basis eines durch Luftfeuchte polymerisierenden Polyurethan-Lackes verwendet wird.

Mit derartigen Verfahrensschritten ist sichergestellt, daß der angespritzte Rahmen auch dauerhaft an der Glasscheibe anhaftet und allen Beanspruchungen standhält.

Anhand einer schematischen Zeichnung ist das Verfahren nach der Erfindung im einzelnen erläutert. Dabei zeigen:

Fig. 1 eine Aufsicht auf ein Dreiecksfenster mit angespritztem Rahmen und

Fig. 2 einen Querschnitt durch einen Teilbereich der Scheibe sowie durch den anzuspritzenden Rahmen.

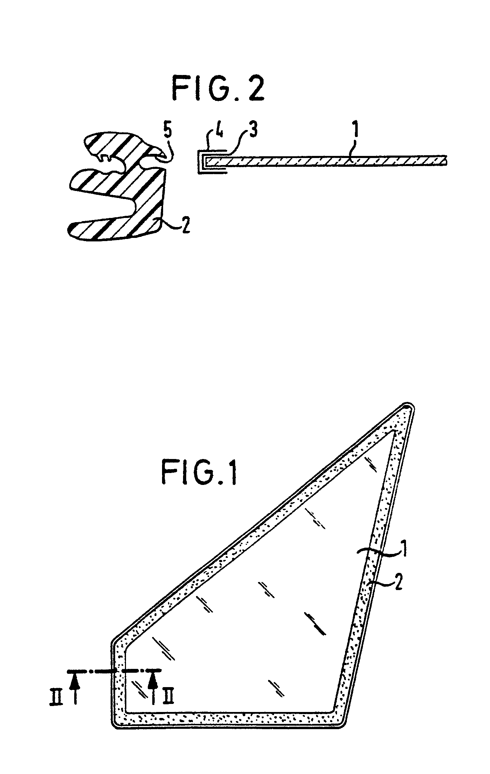

Direkt angespritzte Rahmen werden im allgemeinen nur für kleinere, feststehende Scheiben wie beispielsweise dem in Fig. 1 gezeigten Dreiecksfenster 1 verwendet. Dieses Dreiecksfenster 1 soll allseitig mit einem Rahmen 2 aus einem thermoplastischen Material insbesondere PVC umgeben werden, um dann als integrale Baueinheit in das Kraftfahrzeug eingesetzt werden zu können.

Nach der Prinzipzeichnung in Fig. 2 wird die Glasscheibe 1 zunächst an ihrem Umfangsrand mit einem Lösungsmittel gereinigt, wobei dieses Lösungsmittel hydrophobierende Komponenten aufweist, um die Haftung des anschließend aufzutragenden Primers zu verbessern.

Nach der entsprechenden Reinigung wird ein schwarzer Glasprimer 3 auf Basis eines durch Luftfeuchte polymerisierenden Polyurethan-Lackes aufgetragen, wobei vorher zweckmäßigerweise die freibleibende Fläche der Scheibe 1 mit einer Schablone abgedeckt wird.

Nach Aufbringen dieses Primers 3 wird auf diesen Primer ein Zweikomponenten-Kleber 4 aufgetragen, der durch die Vorbehandlung der Scheibe 1 mit dem Primer 3 jetzt fest auf der Scheibe haftet.

Nach Antrocknen des Klebers 4 wird die so vorbehandelte Scheibe 1 in eine entsprechende Form eingelegt- wie das im einzelnen in der eingangs genannten DE-OS 31 40 366 beschrieben ist - und das thermoplastische Rahmenmaterial mit einer Temperatur von z. B. 170° C in die kalte Form an die kalte Scheibe angespritzt. Das Profil 2 weist in etwa den in Fig. 2 gezeigten Querschnitt auf, wobei dann die Scheibe 1 mit dem Kleberrand 4 innerhalb der Nut 5 des Profils 2 liegt Anstelle der Nut 5 kann das Profil aber auch nur eine nach oben offene Aussparung aufweisen, so daß Proff und Scheibenoberfläche glatt miteinander abschließen.

Nach kurzem Auskühlen des thermoplastischen Materials kann dann die Scheibe 1 mit dem umlaufend angespritzten Rahmen 2 aus der Form entnommen werden.

Durch das heiß eingespritzte Thermoplast ergibt sich mittels des Zweikomponentenklebers 4 und des Primers 3 eine dauerhafte und insbesondere hydrolysebeständige Verbindung zur Glasscheibe 1, die sich auch nicht wieder abschälen läßt, sondern beim Abschälversuch ein Abreißen innerhalb des Rahmenmaterials zur Folge hat.

Mit dem beschriebenen Verfahren ist also auf einfache Weise eine dauerhafte Verbindung eines derart angespritzten Rahmens mit einer Glasscheibe möglich, wobei wegen der einzelnen Verfahrensschritte praktisch bei Raumtemperatur sowohl Einscheibensicherheitsglas als auch Verbundsicherheitsglas unmittelbar umspritzt werden können.

## Patentansprüche

1. Verfahren zur dauerhaften Verbindung von Glasscheiben mit direkt angespritztem Rahmen aus einem Thermoplast, insbesondere für feststehende Scheiben aus Einscheiben- oder Verbundsicherheitsglas in Kraftfahrzeugen, <u>gekennzeichnet durch</u> folgende Verfahrensschritte:

a) Reinigen des Umfangsrandes der Glasscheibe mit einem Lösungsmittel;

b) Aufbringen eines schwarzen Glasprimers auf den gereinigten Rand;

c) Auftragen eines Zweikomponenten-Klebers auf den geprimerten Rand;

d) Antrocknen des Klebers und

e) Anspritzen des Rahmens in einer die Glasscheibe aufnehmenden kalten Form im Spritzgießverfahren.

2. Verfahren nach Anspruch 1, dadurch gekennzeichnet, daß das Lösungsmittel zum Reinigen hydrophobierende Komponenten aufweist.

3. Verfahren nach Anspruch 1, dadurch gekennzeichnet, daß ein Primer auf Basis eines durch Luftfeuchtigkeit polymerisierenden Polyurethanlackes verwendet wird.

## Claims

1. Process for the durable connection of glass panes with directly injected frames of a thermoplastic, in particular for rigidly mounted panes of one-plate or lamanated glass in motor vehicles,

characterised by the following process steps:

(a) cleaning of the edge on the circumference of the glass pane with a solvent;

(b) application of a black glass primer onto the cleaned edge;

(c) application of a two-component adhesive to the primered edge;

(d) drying of the adhesive and

(e) injection of the frame in a cold form accepting the glass pane in an injection moulding process.

2. Process according to claim 1, characterised in that the cleaning solvent comprises water proofing components.

3. Process according to claim 1, characterised in that a primer on a base of a polyurethane lacquer polymerising by air moisture is used.

## Revendications

1. Procédé pour relier de manière durable des vitres à un cadre réalisé directement par injection et en une matière thermoplastique, notamment pour des vitres fixes en verre de sécurité trempé ou en verre de sécurité feuilleté de véhicules automobiles,

caractérisé par les phases opératoires suivantes:

a) nettoyage du bord périphérique de la vitre par un solvant;

b) dépôt d'une couche primaire noire pour du verre sur le bord nettoyé;

c) dépôt d'une colle à deux constituants sur le bord revêtu de la couche primaire;

d) séchage de la colle; et

e) réalisation directe par injection du cadre dans un moule froid de réception de la vitre par un procédé de moulage par injection.

2. Procédé suivant la revendication 1, caractérisé en ce que le solvant comporte pour le nettoyage des constituants hydrophobes.

3. Procédé suivant la revendication 1, caractérisé en ce qu'il consiste à utiliser une couche primaire à base d'un vernis de polyuréthanne polymérisant sous l'effet de l'humidité de l'air.

# FIG. 2

# FIG.1